# EUROPEAN PATENT SPECIFICATION

(11) **EP 2 540 207 B1**
(45) Date of publication and mention of the grant of the patent: **04.12.2019**
(21) Application number: 11747002.1
(22) Date of filing: 17.02.2011
(51) Int. Cl.: A47L 15/42

(54) **DISH WASHING MACHINE**
GESCHIRRSPÜLMASCHINE
LAVE-VAISSELLE

(30) Priority: 26.03.2010 JP 2010072022; 25.02.2010 JP 2010039709
(43) Date of publication of application: 02.01.2013
(73) Proprietor: Panasonic Corporation, Kadoma-shi Osaka 571-8501 (JP)
(72) Inventor: MIYAUCHI, Takashi, Chuo-ku, Osaka 540-6207 (JP)
(74) Representative: SSM Sandmair
(86) International application number: PCT/JP2011/000868
(87) International publication number: WO 2011/105029

(56) References cited:
- EP-A1- 0 058 576
- GB-A- 2 266 898
- JP-A- 4 240 485
- JP-A- 4 319 329
- JP-A- H04 240 485
- JP-A- H04 319 329
- JP-A- 2005 344 676
- JP-A- 2008 038 743
- US-A- 5 331 177

## Description

### TECHNICAL FIELD

The present invention relates to a dishwasher for washing objects to be washed such as dishes.

### BACKGROUND ART

A conventional dishwasher includes a light sensor for sensing the turbidity (transmittance) of washing water used for washing dishes.

A description is made of a dishwasher in patent literature 1 as an example of this dishwasher.

A dishwasher in patent literature 1 includes a wash tub for containing dishes; a wash nozzle placed inside the wash tub; and a wash pump for feeding the wash nozzle with washing water. When dishes are washed by this dishwasher, they are contained in the wash tub, and a given amount of washing water is fed into the wash tub. Then, washing water stored in the bottom of the wash tub is fed to the wash nozzle with the wash pump. Washing water is sprayed at the dishes contained in the wash tub from the wash nozzle to wash the dishes. The washing water sprayed at the dishes is stored in the bottom of the wash tub and is sent to the wash nozzle again with the wash pump.

This dishwasher further includes a drain pump for discharging washing water in the wash tub to the outside of the dishwasher, thereby allowing the water to be discharged to the outside of the dishwasher through the drain path. In this dishwasher, a turbidity sensor provided halfway through this drain path senses the turbidity of washing water to be discharged. As the turbidity sensor, a transmitting light sensor is used composed of a light-emitting unit and light-receiving unit.

Some typical dishwashers include a turbidity sensor for sensing the turbidity of washing water during a washing cycle. Such a dishwasher is provided with a turbidity sensor halfway through the circulation path of washing water circulated by the wash pump. The turbidity of washing water during washing is sensed by this turbidity sensor, which controls washing of dishes.

However, a dishwasher of patent literature 1 or another typical dishwasher has its piping path below the wash tub, and thus some water remains even after the dishwasher finally drains. Soil such as oil removed from dishes and mixed into washing water adheres to the inside of the piping where the turbidity sensor is placed. A long-time use of the dishwasher in such a state gradually decreases the light transmittance to lower the accuracy of the turbidity measurement by the turbidity sensor. Hence, it is undesirably difficult to determine the turbidity precisely and stably over a long period.

### Citation List

### Patent Literature

**PTL 1** Japanese Patent Unexamined Publication JP H04-319329

JP H 04-319329 A relates to a drainage turbidity detecting device. A drain pipe is connected to a drain basin where washing water (hot water) is reserved, through a drain pump, and a turbidity detector is provided on the discharge side of the drain pump. Bubbles are generated on the suction side of the detector due to the circulation of washing water by means of a washing pump, but bubbles are hard to be generated on the discharge side of the detector due to washing water (hot water) being stationary. Accordingly, detection can be performed under the condition of bubbles not being contained in washing water (hot water).

JP 2005-344676 A relates to a pump and dishwasher with the pump. This pump comprises a rotating shaft rotatably pivoting a valve element. A projected part is formed at one end of the rotating shaft and a recessed part is formed at the other end. A receiving part allowing the projected part to be fitted therein and a support part allowing the recessed part to be fitted thereto are formed on a casing or a casing cover. The support part is positioned under the receiving part.

JP H 04-240485 A relates to a turbidity detector for a washing machine. A circulation path is provided outside a tank and has a protruding auxiliary tank, a part of which is made to be semi-transparent. The semi-transparent part of the auxiliary tank is equipped with a turbidity sensor, which consists of a light emitting element and a light receiving element opposed to each other and outputs signals to a control means. If a drum is rotated clock wise for washing, water stream in the circulation path flows in direction A, while if the drum is rotated counter clock wise, the water stream flows in direction B, whereby stagnation of washing liquid at the turbidity sensor part is eliminated by circulation.

US 5,331,177 A relates to a turbidity sensor with analog to digital conversion capability. A turbidity sensor is provided with a light source and a plurality of light sensitive components which are disposed proximate a conduit to measure the light intensity directly across the conduit from the light source and at an angle therefrom. The conduit is provided with a plurality of protrusions extending radially inward from the walls of the conduit to discourage the passage of air bubbles through the light beam of the sensor. The direct light beam and scattered light are compared to form a relationship that is indicative of the turbidity of the liquid passing through the conduit. The rate of change of turbidity is provided as a monitored variable.

### SUMMARY OF THE INVENTION

It is an object of the present invention to provide an improved and useful dishwasher in which the above-mentioned problems are eliminated. In order to achieve the above-mentioned object, there is provided a dishwasher according to claim 1. Advantageous embodiments are defined by the dependent claims.

Advantageously, a dishwasher is structured so that a turbidity sensor for sensing information related to the turbidity of washing water is positioned higher than the level of washing water remaining in the drain path when draining ends.

With this configuration, in a dishwasher, a turbidity sensor is provided in the drain path outside the dishwasher, higher than the drain pump, making the sensor distant from the wash tub. Accordingly, there is infrequent turnover between clean washing water fed first and soiled washing water in the wash tub during a washing cycle, which always keeps clean the inside of the piping of the drain path where the turbidity sensor is placed. When the dishwasher completes its operation, no water remains inside the piping where the turbidity sensor is placed, which prevents the sensor from contacting soil contained in the remaining water and keeps the sensor clean.

Advantageously, a dishwasher prevents soil such as oil removed from objects to be washed and mixed into washing water from adhering to the inside of the piping of the drain path where the turbidity sensor is placed. This allows the dishwasher to sense the turbidity of washing water precisely and stably over a long period while washing objects to be washed appropriately according to the level of contamination of the objects.

### BRIEF DESCRIPTION OF DRAWINGS

FIG. 1 is a longitudinal sectional view showing the configuration of a dishwasher according to the first exemplary embodiment of the present invention.
FIG. 2 is a sectional view showing the configuration of the pump of the dishwasher.
FIG. 3 is a perspective view of the turbidity sensor of the dishwasher.
FIG. 4 is a sectional side view of the turbidity sensor of the dishwasher.
FIG. 5 is a sectional elevational view of the turbidity sensor of the dishwasher.
FIG. 6 is a perspective view of the turbidity sensor of a dishwasher according to the second exemplary embodiment of the present invention.
FIG. 7 is a sectional side view of the turbidity sensor of the dishwasher.

### DESCRIPTION OF EMBODIMENTS

Hereinafter, a description is made of some exemplary embodiments of the present invention with reference to the related drawings. The invention is not limited by the embodiments.

### FIRST EXEMPLARY EMBODIMENT

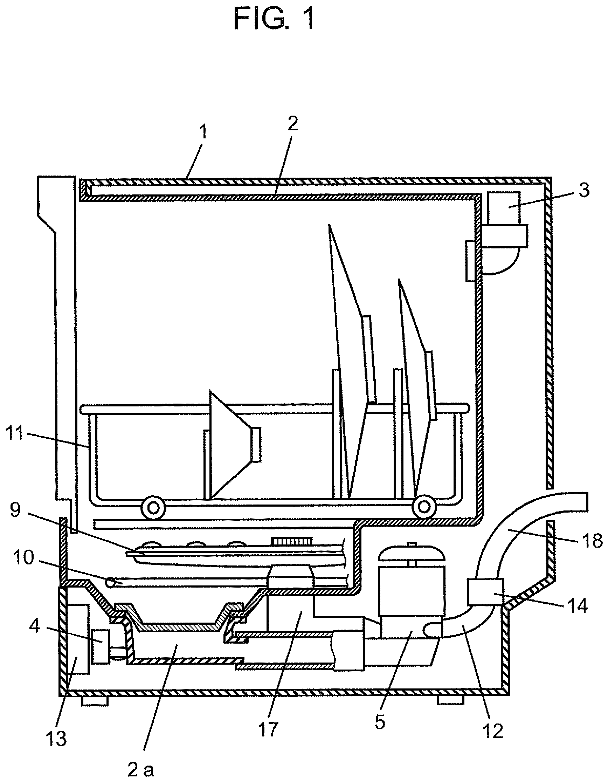

FIG. 1 is a longitudinal sectional view of a dishwasher according to the first exemplary embodiment of the present invention. In FIG. 1, dishwasher body 1 is provided therein with wash tub 2, into which cold or hot water is fed by feed water unit 3. Feed water unit 3 controls the feed water amount using water level sensor 4 communicatively connected to wash tub 2 so as to stop operation when a given water level is reached, wash tub 2 is provided at the bottom thereof with water storage unit 2a, to which pump 5 driven by a motor is attached communicatatively connected to water storage unit 2a.

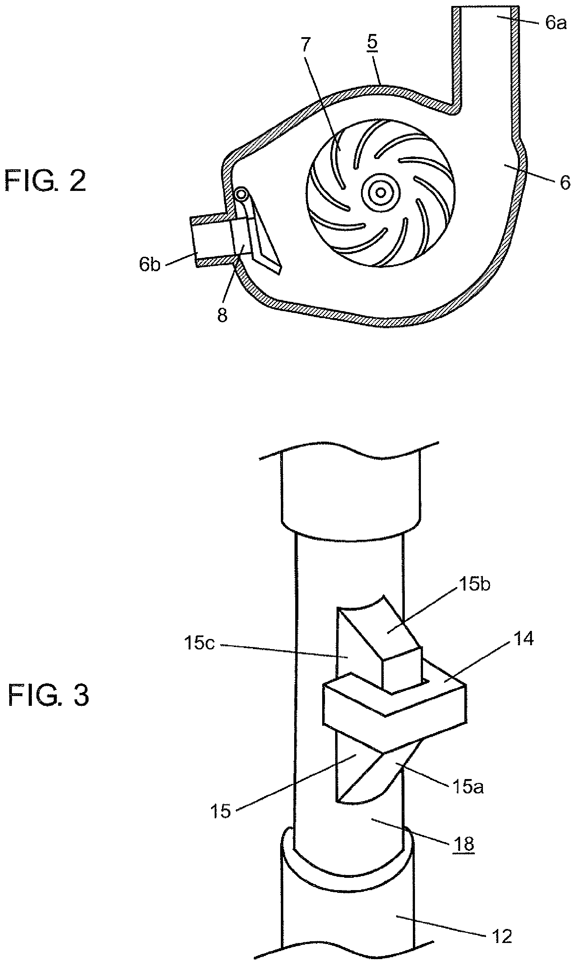

A description is made of the configuration and operation of pump 5 using FIG. 2. FIG. 2 is a sectional view showing the configuration of the pump of a dishwasher according to the first embodiment of the present invention. Pump 5 is composed of pump casing 6, impeller 7, and switch valve 8. Pump casing 6 has wash-end pipe 6a for discharging water to wash nozzle 9; and drain-end pipe 6b for discharging water to drain path 12 for draining water to the outside of the dishwasher. When the motor of pump 5 rotates impeller 7 counterclockwise, washing water flows to wash-end pipe 6a, where pump 5 functions as a wash pump. In this case, switch valve 8 is pressed against the wall at the inlet of drain-end pipe 6b by a pressure caused by a flow of washing water to keep drain-end pipe 6b closed, preventing the water from flowing toward drain path 12.

On the other hand, when impeller 7 rotates clockwise, a pressure of washing water is exerted so as to open switch valve 8, and washing water flows toward drain path 12, where pump 5 functions as a drain pump. While the motor is not rotating, switch valve 8 is not in a closed state with respect to drain-end pipe 6b.

In this way, pump 5 functions as a wash-cum-drain pump. Hereinafter, pump 5 refers to wash pump 5a when functioning as a wash pump; drain pump 5b, as a drain pump.

In reference to FIG. 1 again, a description is made of a washing cycle and a drain cycle.

In the washing cycle, wash pump 5a circulates washing water inside the dishwasher body. Washing water fed into wash tub 2 is drawn to wash pump 5a from water storage unit 2a. Driven by wash pump 5a, the water passes from wash-end pipe 6a through wash path 17 to be fed to wash nozzle 9 provided on the inner bottom of wash tub 2. The water sprayed out from wash nozzle 9 washes objects to be washed (dishes) contained in wash tub 2, and then returns to water storage unit 2a. The washing water circulates through the above path. Dishwasher body 1 includes heater 10 for heating washing water between wash nozzle 9 and the bottom of wash tub 2; and rack 11 structured so that objects to be washed are placed in an orderly manner and washing water is sprayed over the objects effectively to efficiently wash the objects.

In the drain cycle, drain pump 5b discharges washing water from drain-end pipe 6b through drain path 12 to the outside of the dishwasher. Further, control unit 13 controls feed water unit 3 and electrical components such as pump 5.

Halfway through drain path 12 outside the dishwasher (i.e. the downstream side where drain water flows from drain pump 5b), substantially vertical part 18 is provided through which washing water to be discharged flows upward. Outside substantially vertical part 18, turbidity sensor 14 is placed for sensing the turbidity of washing water. The position where turbidity sensor 14 is placed is higher than that of remaining water when drain pump 5b ends draining of the dishwasher; and is below the level of washing water sensed by water level sensor 4 during the washing cycle.

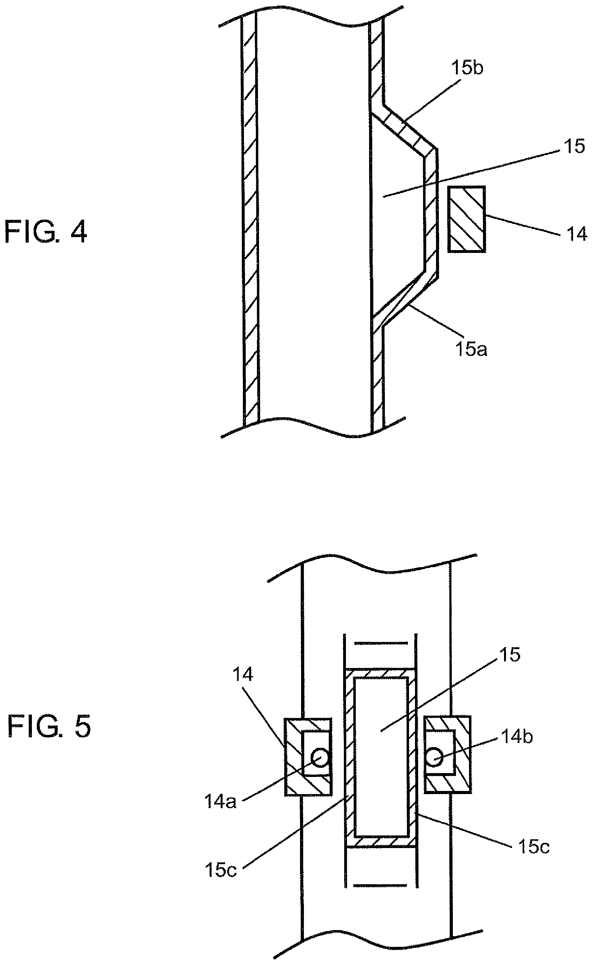

A description is made of the configuration and operation of turbidity sensor 14 using FIGs. 3 through 5. FIG. 3 is a perspective view of the turbidity sensor of a dishwasher according to the first embodiment of the present invention. FIG. 4 is a sectional side view of the turbidity sensor of the dishwasher. FIG. 5 is a sectional elevational view of the turbidity sensor of the dishwasher.

Substantially vertical part 18 halfway through drain path 12 is provided with projection 15 projected from drain path 12. The inner surfaces of bottom surface 15a and top surface 15b of projection 15 are inclined as shown in the figure. More specifically, the inner surface of bottom surface 15a is inclined so that the end of the bottom surface connected to drain path 12 is lower than the top of projection 15 projected. The inner surface of top surface 15b is inclined so that the end of the top surface connected to drain path 12 is higher than the top of projection 15 projected. In other words, the inner surface of bottom surface 15a is inclined more outward toward the downstream end of drain path 12; the inner surface of top surface 15b is inclined more inward toward the downstream end of drain path 12. Side surfaces 15c on the right and left are placed substantially vertically facing each other in parallel.

Turbidity sensor 14 is placed so as to cover projection 15. Light-emitting unit 14a and light-receiving unit 14b of turbidity sensor 14 are provided outside side surfaces 15c facing each other. In this case, the distance between unit 14a and unit 14b is appropriately set according to their sensing capability. The width (the distance between side surfaces 15c at both ends) of projection 15 is smaller than the width of drain path 12 at substantially vertical part 18. Projection 15 provided with a given distance with respect to the width of drain path 12 enables turbidity sensor 14 to allow appropriate distance required.

Drain path 12 needs to have a minimum cross-sectional area required for discharging washing water to the outside of the dishwasher. Also, light-emitting unit 14a and light-receiving unit 14b of turbidity sensor 14 have a required distance for reasons of the sensing capability. An attempt to provide turbidity sensor 14 outside the entire drain path 12 sometimes causes the distance between unit 14a and unit 14b to exceed a required distance. In this embodiment, however, projection 15 with an appropriate width smaller than that of drain path 12 is provided to enable turbidity sensor 14 to allow a required distance. Accordingly, the invention obtains a desired drain performance owing to a cross-sectional area of drain path 12 wide enough while obtaining a desired sensing accuracy of turbidity sensor 14.

Meanwhile, the inner surfaces of the top and bottom surfaces 15b and 15a of projection 15 have appropriate slopes to prevent eddies from being generated inside projection 15 due to a flow of washing water when drained. Further, bubbles generated when washing water flows in while turbidity sensor 14 is sensing move upward. On the other hand, when sensing is made when draining is stopped, foreign matters with a large specific gravity fall down; with a small specific gravity, moves upward. Hence, stable sensing with a high accuracy is available both in a draining state and in a stop state when sensing is made.

Hereinafter, a description is made of operation and effects of a dishwasher structured as above.

First, water is fed in the washing cycle. Feed water unit 3 is opened to start feeding water. When a given water level is reached, feed water unit 3 is closed by control based on a sensing signal from water level sensor 4 to complete feeding water. At this moment, since the motor for driving pump 5 is not rotating and switch valve 8 does not close drain-end pipe 6b, washing water naturally reaches drain path 12 as well communicatatively connected to water storage unit 2a of wash tub 2 through the inside of pump 5. Since turbidity sensor 14 is positioned below the level of washing water sensed by water level sensor 4 in the washing cycle, drain path 12 at turbidity sensor 14 and the inside of projection 15 as well are filled with washing water.

When washing is started, switch valve 8 is closed at the drain end due to a flow of washing water, which does not enter the drain end. Hence in this state, the early-stage clean washing water remains confined, and thus soil dissolved in washing water circulating during the washing cycle does not adhere to the inner surface around projection 15, which is a part of the drain path facing turbidity sensor 14, thereby keeping the inner surface clean. In this state, however, the early-stage clean washing water remains confined in the part of the drain path facing turbidity sensor 14, and thus soil in washing water inside wash tub 2 cannot be sensed.

When soil inside wash tub 2 is sensed in the washing cycle, drain pump 5b slightly operates, and then stops. Consequently, soiled washing water inside wash tub 2 enters the part around projection 15, which is a part of the drain path facing turbidity sensor 14, where the turbidity of the washing water can be measured.

At this moment, the part around projection 15 facing turbidity sensor 14 is already filled with early-stage washing water since feeding water has been completed, and thus discontinuous, disturbed actions in the washing water hardly occur, thereby allowing the turbidity to be sensed in a stable state. Unlike a conventional dishwasher, in which the part around the turbidity sensor is always exposed to soil, such conditions can be much reduced. The turbidity measured determines the number of rinsing times.

After that, the rinsing cycle and the drying cycle are performed to terminate the operation. The level of the remaining washing water after drained at the final stage of the operation is below the position of turbidity sensor 14. Hence after the operation ends, the inner surface around projection 15 of drain path 12 facing turbidity sensor 14 does not contact washing water, and thus soil does not adhere. Also, the dried state prevents mold and other matters from adhering.

Here, although the final remaining water is basically clean, some soil may remain. Further, when a small or no amount of detergent is used, much soil may remain. According to the present invention, however, turbidity sensor 14 placed in a position higher than the level of the final remaining water prevents soil such as oil removed from objects to be washed and mixed into washing water from adhering to the inside of the piping of drain path 12, particularly to the inner surface around projection 15.

Here, drain pump 5b operates at a level such that water is not drained, allowing the turbidity of washing water to be measured at any time during the washing cycle.

When turbidity is measured at only the final stage of the washing cycle, or in the rinsing cycle, the turbidity of washing water is measured in a stable state in which drain pump 5b is in a stop state and washing water is present higher than the position of turbidity sensor 14 in the subsequent drain cycle. Even while washing water is flowing in process of draining, turbidity sensor 14 measures the turbidity while the water is flowing stably, thereby allowing nearly precise measurement.

Pump 5 functions as two types of pumps: wash pump 5a and drain pump 5b by changing the rotation direction of the motor. However, pump 5 may function as two types of pumps with a single directional rotation where switch valve 8 is switched by a drive device to change the direction of washing water to between wash-end pipe 6a and drain-end pipe 6b.

The description is made of a pump including a switch valve. However, even for a pump without a switch valve or separate types of pumps (i.e. a wash pump and a drain pump), remaining water does not cause soil to adhere to turbidity sensor 14 since turbidity sensor 14 is positioned higher than the remaining water.

Substantially vertical part 18 is provided halfway through drain path 12 from drain pump 5b outside the dishwasher, and is provided at a high position unlike a conventional type (i.e. under wash tub 2). Consequently, turbidity sensor 14 is to be positioned considerably far from wash tub 2 within drain path 12 even during the washing cycle, and thus clean water initially fed does not easily change places with soiled washing water in wash tub 2, which is advantageous against adhesion of soil, remarkably advantageous compared to that having its turbidity sensor in the circulation path of washing water. Here, temporal delay and degration in accuracy in sensing turbidity present no practical problems.

As described above, in this embodiment, turbidity sensor 14 for sensing information related to the turbidity of washing water is placed in a position higher than the level of the washing water remaining inside drain path 12 when the final draining during operation of the dishwasher ends. Accordingly, when the dishwasher ends its operation, no water remains at projection 15 of drain path 12 where turbidity sensor 14 is placed, which prevents turbidity sensor 14 from contacting soil contained in the remaining water and keeps turbidity sensor 14 clean. This prevents soil such as oil removed from objects to be washed and mixed into washing water from adhering to projection 15 of drain path 12 where turbidity sensor 14 is placed. This allows the dishwasher to sense the turbidity of washing water precisely and stably over a long period while washing objects to be washed appropriately according to the level of contamination of the objects.

Meanwhile, the inner surfaces of top and bottom surfaces 15b and 15a of projection 15 are inclined to prevent eddies from being generated inside projection 15 due to a flow of washing water when drained. Further, washing water to be drained may contain bubbles, causing the accuracy in sensing turbidity to degrade significantly. Bubbles generated when washing water flows in while turbidity sensor 14 is sensing move upward. On the other hand, when sensing is made while draining is in a stop state, foreign matters with a large specific gravity fall down; with a small specific gravity, move upward. Washing water that has reached turbidity sensor 14 reliably falls downward when the level of washing water lowers to prevent the water from remaining at turbidity sensor 14. Hence, stable sensing with a high accuracy is available both in a draining state and in a stop state when sensing is made.

Here, the inner surfaces of top and bottom surfaces 15b and 15a of projection 15 are not necessarily inclined at a constant angle as shown in FIG. 4, but may be at a smoothly or gradually changing angle.

### SECOND EXEMPLARY EMBODIMENT

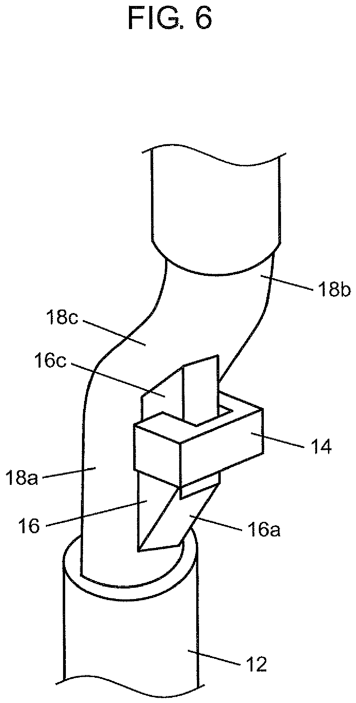

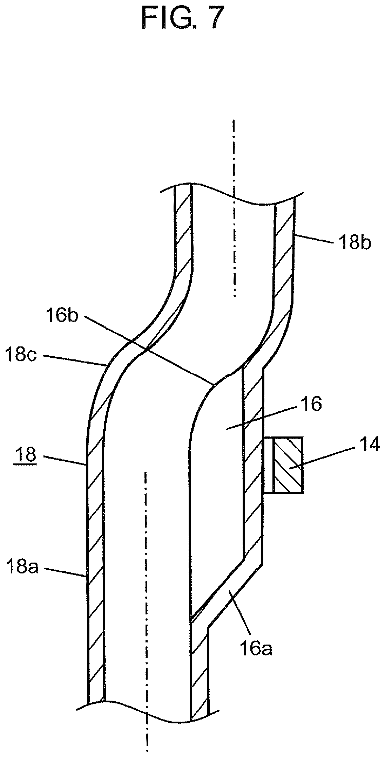

FIGs. 6 and 7 illustrate the projection of the drain path and the turbidity sensor of a dishwasher according to the second exemplary embodiment of the present invention. More specifically, FIG. 6 is a perspective view of the turbidity sensor of the dishwasher. FIG. 7 is a sectional side view of the turbidity sensor of the dishwasher.

In the first embodiment, substantially vertical part 18 halfway through drain path 12 is linear-shaped. In this embodiment, upstream vertical part 18a (upstream of drain) and downstream vertical part 18b (downstream of drain) are horizontally displaced from each other, and inclined part 18c between them is smoothly connected to them. Part 18a and part 18b are made nearly equal in the width of their pipes in the direction of displacement. Projection 16 is provided projecting from substantially vertical part 18 so as to ride on from upstream vertical part 18a to inclined part 18c. The projection length of projection 16 from drain path 12 (upstream vertical part 18a) is set so as not to exceed the displacement length between part 18a and part 18b. Hence, drain path 12 bends above projection 16 of substantially vertical part 18.

In this configuration, the inner surface of bottom surface 16a of projection 16 is similar in shape to that of bottom surface 15a of the first embodiment; is connected to upstream vertical part 18a; and is inclined as shown in the figure. The top is connected to inclined part 18c to be directly connected to drain path 12, and thus the top of projection 16 is opening 16b in an open state. Side surfaces 16c at both sides are arranged substantially vertically facing each other in parallel.

The configuration around the turbidity sensor is similar to that of the first embodiment. Turbidity sensor 14 is placed so as to cover projection 16, and light-emitting unit 14a and light-receiving unit 14b are provided facing each other outside side surface 16c. In this case, the distance between unit 14a and unit 14b is set to an appropriate distance according to their sensing capability. The width (the distance between side surfaces 16c on both sides) of projection 16 is set smaller than that of drain path 12 at substantially vertical part 18, and projection 16 is provided with a given distance with respect to the width of drain path 12, enabling turbidity sensor 14 to allow a necessary, appropriate distance.

In this embodiment, the inner surface of bottom surface 16a of projection 16 has an appropriate slope and the top is open as opening 16b to further effectively prevent eddies to be generated inside projection 16 in a flow of washing water when drained. Further, bubbles generated when washing water flows in while turbidity sensor 14 is sensing move upward more quickly. On the other hand, when sensing is made while draining is in a stop state, foreign matters with a large specific gravity fall down; with a small specific gravity, move upward more quickly. Washing water that has reached turbidity sensor 14 reliably falls downward when the level of washing water lowers to prevent the water from remaining at turbidity sensor 14. Hence, more stable sensing with a higher accuracy is available both in a draining state and in a stop state when sensing is made.

Here, the inner surface of bottom surface 16a of projection 16 is not necessarily inclined at a constant angle as shown in FIG. 7, but may be at a smoothly or gradually changing angle.

Operation, effects, and advantages as a dishwasher are the same as those of the first embodiment.

### INDUSTRIAL APPLICABILITY

As described above, a dishwasher of the present invention prevents soil such as oil removed from objects to be washed and mixed into washing water from adhering to the inside of the piping of the drain path where a turbidity sensor is placed. This allows the dishwasher to sense the turbidity of washing water precisely and stably over a long period while washing objects to be washed appropriately according to the level of contamination of the objects, and thus can be effectively used for such a dishwasher having a function of sensing the turbidity of washing water.

### REFERENCE MARKS IN THE DRAWINGS

- 2: Wash tub
- 2a: Water storage unit
- 3: Feed water unit
- 4: Water level sensor
- 5: Pump
- 5a: Wash pump
- 5b: Drain pump
- 8: Switch valve
- 9: Wash nozzle
- 12: Drain path
- 14: Turbidity sensor
- 14a: Light-emitting unit
- 14b: Light-receiving unit
- 15: Projection
- 15a: Bottom surface
- 15b: Top surface
- 15c: Side surface
- 16: Projection
- 16a: Bottom surface
- 16b: Opening
- 16c: Side surface
- 17: Wash path
- 18: Substantially vertical part
- 18a: Upstream vertical part
- 18b: Downstream vertical part
- 18c: Inclined part

## Claims

1. A dishwasher for washing an object to be washed, comprising:
a wash tub (2) for containing the object to be washed;
a wash nozzle (9) for washing the object inside the wash tub (2);
a feed water unit (3) for feeding water to the inside of the wash tub (2);
a drain path (12) for discharging washing water from the wash tub (2) to the outside of the dishwasher; and
a turbidity sensor (14) placed on the drain path (12), for sensing information related to turbidity of washing water inside the drain path (12),
wherein the turbidity sensor (14) is placed in a position higher than a level of the washing water remaining in the drain path (12) when draining ends,
wherein the drain path (12) has a substantially vertical part (18) through which washing water flows upward and the substantially vertical part (18) includes a projection (15, 16) projected from the drain path (12),
wherein the turbidity sensor (14) is placed outside the projection (15; 16),
wherein the projection (15; 16) is connected to the drain path (12) at a bottom surface (15a; 16a) of the projection (15; 16),
**characterized in that**
the bottom surface (15a; 16a) is obliquely formed so that a part of the bottom surface (15a; 16a) connected to the drain path (12) is lower than a projected top of the projection (15; 16),
wherein a side surface (15c; 16c) of the projection (15; 16) is formed of a substantially vertical surface, and
wherein the turbidity sensor (14) has a light-emitting unit (14a) and a light-receiving unit (14b) facing each other outside the side surface (15c; 16c).

2. The dishwasher of claim 1, wherein the position of the turbidity sensor (14) is below a level of washing water in a washing cycle for washing the object.

3. The dishwasher of claim 1, further comprising:
a water storage unit (2a) at a bottom of the wash tub (2);
a pump (5) for drawing in washing water from the water storage unit (2a) and for pressurizing the washing water;
a wash path (17) for connecting the pump (5) with the wash nozzle (9),
wherein the pump (5) functions as a wash-cum-drain pump including a switching valve (8) for changing a direction of feeding the washing water to any of the wash path (17) and the drain path (12).

4. The dishwasher of claim 1, wherein the projection (16) is connected to the drain path (12) at a top surface of the projection,
wherein the top surface (15b) is obliquely formed so that a part of the top surface (15b) connected to the drain path (12) is higher than a projected top of the projection,

5. The dishwasher of claim 1, wherein the top of the projection (16) is open to the drain path (12).

6. The dishwasher of claim 1, wherein the substantially vertical part (18) includes an upstream vertical part (18a) and a downstream vertical part (18b), the upstream vertical part (18a) and the downstream vertical part (18b) being horizontally displaced from each other and smoothly connected with each other.

## Patentansprüche

1. Geschirrspülmaschine zum Spülen eines zu spülenden Gegenstands, die Folgendes umfasst:
einen Spülbehälter (2) zum Aufnehmen des zu spülenden Gegenstands;
eine Spüldüse (9) zum Spülen des Gegenstands in dem Spülbehälter (2);
eine Wasserzuführeinheit (3) zum Zuführen von Wasser in das Innere des Spülbehälters (2);
einen Abflussweg (12) zum Ablassen von Spülwasser aus dem Spülbehälter (2) zur Außenseite der Geschirrspülmaschine und
einen Trübheitssensor (14), der in dem Abflussweg (12) angeordnet ist, zum Erfassen von Informationen, die sich auf die Trübheit von Spülwasser in dem Abflussweg (12) beziehen,
wobei der Trübheitssensor (14) an einer Position angeordnet ist, die höher ist als ein Pegel des Spülwassers, das in dem Abflussweg (12) verbleibt, wenn das Abfließen endet,
wobei der Abflussweg (12) einen im Wesentlichen vertikalen Teil (18) aufweist, durch den Spülwasser nach oben fließt, und der im Wesentlichen vertikale Teil (18) einen Vorsprung (15, 16) umfasst, der von dem Abflussweg (12) vorsteht,
wobei der Trübheitssensor (14) außerhalb des Vorsprungs (15; 16) angeordnet ist,
wobei der Vorsprung (15; 16) an einer unteren Oberfläche (15a; 16a) des Vorsprungs (15; 16) mit dem Abflussweg (12) verbunden ist,
**dadurch gekennzeichnet, dass**
die untere Oberfläche (15a; 16a) schräg ausgebildet ist, so dass ein Teil der unteren Oberfläche (15a; 16a), der mit dem Abflussweg (12) verbunden ist, niedriger liegt als eine vorstehende Spitze des Vorsprungs (15; 16),
wobei eine seitliche Oberfläche (15c; 16c) des Vorsprungs (15; 16) aus einer im Wesentlichen vertikalen Oberfläche gebildet ist und
wobei der Trübheitssensor (14) eine lichtemittierende Einheit (14a) und eine lichtempfangende Einheit (14b) aufweist, die einander außerhalb der seitlichen Oberfläche (15c; 16c) zugewandt sind.

2. Geschirrspülmaschine nach Anspruch 1, wobei die Position des Trübheitssensors (14) in einem Spülzyklus zum Spülen des Gegenstands unter einem Spülwasserpegel liegt.

3. Geschirrspülmaschine nach Anspruch 1, die ferner Folgendes umfasst:
eine Wasserspeichereinheit (2a) auf einer Unterseite des Spülbehälters (2);
eine Pumpe (5) zum Ansaugen von Spülwasser von der Wasserspeichereinheit (2a) und zum Unterdrucksetzen des Spülwassers;
einen Spülweg (17) zum Verbinden der Pumpe (5) mit der Spüldüse (9),
wobei die Pumpe (5) als eine Spül- und Abflusspumpe dient, die ein Schaltventil (8) zum Ändern einer Zuführrichtung des Spülwassers entweder zu dem Spülweg (17) oder dem Abflussweg (12) enthält.

4. Geschirrspülmaschine nach Anspruch 1, wobei der Vorsprung (16) an einer oberen Oberfläche des Vorsprungs mit dem Abflussweg (12) verbunden ist,
wobei die obere Oberfläche (15b) schräg ausgebildet ist, so dass ein Teil der oberen Oberfläche (15b), die mit dem Abflussweg (12) verbunden ist, höher liegt als eine vorstehende Spitze des Vorsprungs.

5. Geschirrspülmaschine nach Anspruch 1, wobei die Spitze des Vorsprungs (16) zu dem Abflussweg (12) offen ist.

6. Geschirrspülmaschine nach Anspruch 1, wobei der im Wesentlichen vertikale Teil (18) einen stromaufwärtigen vertikalen Teil (18a) und einen stromabwärtigen vertikalen Teil (18b) umfasst, wobei der stromaufwärtige vertikale Teil (18a) und der stromabwärtige vertikale Teil (18b) voneinander horizontal versetzt sind und glatt miteinander verbunden sind.

## Revendications

1. Lave-vaisselle destiné à laver un objet à laver, comprenant :
une cuve de lavage (2) destinée à contenir l'objet à laver ;
une buse de lavage (9) destinée à laver l'objet à l'intérieur de la cuve de lavage (2) ;
une unité d'eau d'alimentation (3) destinée à alimenter en eau l'intérieur de la cuve de lavage (2) ;
un trajet d'évacuation (12) destiné à évacuer l'eau de lavage de la cuve de lavage (2) vers l'extérieur du lave-vaisselle ; et
un capteur de turbidité (14) placé sur le trajet d'évacuation (12), destiné à capter des informations liées à la turbidité de l'eau de lavage à l'intérieur du trajet d'évacuation (12),
le capteur de turbidité (14) étant placé dans une position supérieure à un niveau de l'eau de lavage restant dans le trajet d'évacuation (12) lorsque l'évacuation se termine,
le trajet d'évacuation (12) comportant une partie sensiblement verticale (18) à travers laquelle l'eau de lavage s'écoule vers le haut et la partie sensiblement verticale (18) comprend une saillie (15, 16) faisant saillie depuis le trajet d'évacuation (12),
le capteur de turbidité (14) étant placé à l'extérieur de la saillie (15 ; 16),
la saillie (15 ; 16) étant reliée au trajet d'évacuation (12) au niveau d'une surface inférieure (15a ; 16a) de la saillie (15 ; 16),
**caractérisé en ce que**
la surface inférieure (15a ; 16a) est formée de manière oblique de manière qu'une partie de la surface inférieure (15a ; 16a) reliée au trajet d'évacuation (12) est inférieure à un sommet en saillie de la saillie (15 ; 16),
une surface latérale (15c ; 16c) de la saillie (15 ; 16) étant formée d'une surface sensiblement verticale, et
le capteur de turbidité (14) comportant une unité électroluminescente (14a) et une unité de réception de lumière (14b) se faisant face à l'extérieur de la surface latérale (15c ; 16c).

2. Lave-vaisselle selon la revendication 1, dans lequel la position du capteur de turbidité (14) se situe au-dessous d'un niveau d'eau de lavage dans un cycle de lavage pour laver l'objet.

3. Lave-vaisselle selon la revendication 1, comprenant en outre :
une unité de stockage d'eau (2a) au fond de la cuve de lavage (2) ;
une pompe (5) destinée à aspirer l'eau de lavage en provenance de l'unité de stockage d'eau (2a) et destinée à mettre sous pression l'eau de lavage ;
un trajet de lavage (17) destiné à relier la pompe (5) à la buse de lavage (9),
la pompe (5) fonctionnant comme pompe de lavage avec vidange comprenant une soupape de commutation (8) destinée à changer une direction d'alimentation en eau de lavage en trajet de lavage (17) ou trajet d'évacuation (12).

4. Lave-vaisselle selon la revendication 1, dans lequel la saillie (16) est reliée au trajet d'évacuation (12) au niveau d'une surface supérieure de la saillie,
dans lequel la surface supérieure (15b) est formée de manière oblique de manière qu'une partie de la surface supérieure (15b) reliée au trajet d'évacuation (12) est supérieure à un sommet en saillie de la saillie,

5. Lave-vaisselle selon la revendication 1, dans lequel la partie supérieure de la saillie (16) est ouverte au trajet d'évacuation (12).

6. Lave-vaisselle selon la revendication 1, dans lequel la partie sensiblement verticale (18) comprend une partie verticale en amont (18a) et une partie verticale en aval (18b), la partie verticale en amont (18a) et la partie verticale en aval (18b) étant déplacées horizontalement l'une par rapport à l'autre et reliées délicatement l'une à l'autre.
